# EUROPEAN PATENT SPECIFICATION

(11) **EP 1 332 663 B1**
(45) Date of publication and mention of the grant of the patent: **22.08.2007**
(21) Application number: 02080161.9
(22) Date of filing: 11.12.2002
(51) Int. Cl.: A01G 1/04

(54) **Cultivating space, as well as method to be used therewith**
Kultivierungraum und ein dazu verwendetes Verfahren
Emplacement aménagé pour la culture et procédé correspondant

(30) Priority: 31.01.2002 NL 1019872
(43) Date of publication of application: 06.08.2003
(73) Proprietor: Van Ooijen Ingenieurs B.V., 5324 BE Ammerzoden (NL)
(72) Inventor: Van Ooijen, Adrianus Johannes, 5324 BE Ammerzoden (NL)
(74) Representative: Valkonet, Rutger

(56) References cited:
- AU-B- 628 067
- FR-A- 2 733 663
- NL-A- 6 900 264
- US-A- 4 267 664

## Description

Apparatus for conditioning air in a cultivating space, as well as a method to be used therewith.

The present invention relates to a cultivating space and a method for conditioning air in a cultivating space, in particular a space for cultivating mushrooms, which space comprises one or more racks on which the products to be cultivated are present, as well as means for supplying air to said space.

FR 2733663 relates to a method for ventilation in cultivation of mushrooms wherein air is circulated between containers in a vertical column and perpendicular to the row of containers to provide a flow of air across the mushrooms. The flow is alternated in direction to encourage uniform growth of the mushrooms across the containers. The air circuit is provided by at least two distribution ducts, which are roughly parallel to the rows of cultivation containers, and on each side of the rows, and by a collector for the air which comes out of the distribution ducts.

A method for cultivating mushrooms is known from Dutch patent application No 6900264. According to said publication, the problem to be solved is the fact that not only spraying and preventing infections, but in particular also ventilating and harvesting are difficult to carry out in the case of the cultivation of mushrooms in propagating cases or in multi-level beds. To solve this problem, a transport mechanism is provided above the culture, with the culture being heated by a combination of an underfloor heating system installed in the floor of the cultivating space and a system for heating and refreshing the air in the space above the culture. A specific transport mechanism that is mentioned therein is a platform which is movable in the longitudinal direction, on which one or more persons can be accommodated and which functions in particular as a harvesting platform for the mushrooms. The mobile platform has a number of air outflow openings, which are directed at the surface of the culture, thereby causing the CO₂ to circulate, after which said CO₂ can be discharged by means of the normal ventilating system of the space. No information is provided as regards the realisation of a more efficient method of conditioning the layer of air just above the products to be cultivated. Moreover, circulation of CO₂ is only possible while the mobile platform is being used, which only takes place for a few hours per day in practice, whilst in addition only a very local circulation is effected, viz. at the location where the mobile platform is present.

The apparatus referred to in the introduction is furthermore known from US patent No 4,267,664. According to the apparatus that is known therefrom, the floor of the space in which the mushrooms are cultivated on racks is fitted with a number of air ducts extending parallel to the racks. Said air ducts are provided with a grille at the upper side, the cross-sectional dimension of which grille decreases from one end to the other end in order to thus realise a constant supply of air at the bottom side of the seed bed. In addition to that, the space is provided with air supply means, which supplies air to the space in a random manner via a fan. One drawback of such an apparatus is that uncontrolled ventilation of the fungi present in the casing soil takes place. This may lead to the development of competing fungi, which has an adverse effect on the yield of mushrooms, for example, per square metre of seed bed. Another drawback is the fact that the environmental conditions are not constant over the entire seed bed, so that there is a risk of mushrooms of random dimension being harvested, which is undesirable in practice.

The mushroom is in fact the fruit body of a fungus, which uses dead organic material as its nutrient medium. In addition to that, the mushroom requires a great deal of moisture. Mushroom growers use composted, straw-rich horse manure, for example, to which broiler manure may be added, as a culture medium for the mushroom. Such a culture medium contains the required organic waste materials, in particular cellulose and lignin. In principle four raw materials are required for the preparation of compost, viz. straw, horse manure, liquid manure and gypsum. The straw, which also forms a major part of the horse manure, provides the nutrient medium. The gypsum provides the required structure and pH value of the compost. All the raw materials are mixed in accordance with a specific formulation and subsequently fermented in special tunnels. As a result of the fermentation process, specific nutrients are produced in the compost, which nutrients enable a mushroom to grow. Generally, an elongated closed space in which racks are present is used for cultivating mushrooms, which racks usually comprise four or eight levels, also called beds. The beds are filled with the compost, to which a layer of casing soil is added, which casing soil functions to keep the compost moist. After the beds have thus been filled, it is the grower's task to create the correct climate in the growing room for the growth of the mushrooms. Thus it is important that the air conditions for the mushrooms in the closed space are such that a maximum yield per square meter of seed bed is achieved whilst the risk of harmful infections is reduced to a minimum.

The object of the present invention is to provide an apparatus and a method for conditioning air in a cultivating space, in which the supply of air must take place in such a manner that optimum growth conditions for the products to be cultivated are realised.

Another object of the present invention is to provide an apparatus and a method for conditioning air in a cultivating space, in which the risk of undesirable infections of the products to be cultivated is minimized.

The cultivating space of claim 1 is **characterized in that** the means for supplying air are positioned around both the length and the traverse sides of the rack to produce a carousel effect of supplied air in the cultivating space.

Thus it has surprisingly been discovered that the air flow above the racks is of major importance as regards the yield of products. It has become apparent in practice that the spaced-apart air outflow openings according to the present invention arrange for the constant refreshment and/or circulation of the layer of air just above the racks, so that optimum conditions for the products to be cultivated are continuously provided. The term "stationary" as used herein is understood to mean remaining in position rather than moving along as described in the laid-open publication NL 6900264 as discussed above.

According to the present invention it is in particular desirable for the means for supplying air to be positioned around the rack.

Such an embodiment in particular leads to a so-called carousel-effect being produced in the cultivating space, which carousel-effect can also be described as a vortex-effect. In this way a very efficient conditioning of the layer of air just above the products to be cultivated is realised, which is an important object of the present invention.

It is also possible, on the other hand, to provide the means for supplying air with means for heating, cooling and humidifying the air to be supplied.

The effect obtained with such an embodiment is not only the fact that continuous refreshment or recirculation of air takes place in the layer of air above the racks, but also the fact that it is possible to adjust the temperature and the air humidity conditions, if desired. Since the cultivation of mushrooms must take place in a humid space, for example, it is thus possible according to such an embodiment to effect optimum temperature and humidity conditions for the products to be cultivated, which has an advantageous effect as regards the yield of products per square meter of seed bed.

In order to obtain an optimum air circulation as described above in the light of achieving the desired carousel-effect, it is in particular desirable to design the means for supplying air, which are disposed between two racks arranged adjacently to each other, as a common unit. Thus it is possible to realise the desired vortex-effect on the racks.

In order to obtain an optimum supply of air to the racks on which the products to be cultivated are present, it is desirable to configure the air outflow openings so that the angle at which the air is blown out ranges between 10-55 °. Such an angle can be obtained by means of a geometric configuration of the outflow openings such that the outflowing air is led in a specific direction towards and/or away from the racks, with the diameter of the air outflow openings ranging in particular between 2-80 mm, preferably between 5-60 mm.

The experiments that have been carried out by the present inventor show that the rate of flow of air flowing out of the air outflow openings preferably ranges between 3-35 m/s, based on an air output of 10-12 m³/m² of cultivating area.

The present invention furthermore relates to a method as defined in claim 9.

The present invention will be discussed hereinafter with reference to two figures, which figures illustrate the present invention without constituting a limitation thereof.
Figure 1 is a schematic top plan view of a cultivating space in which two racks are present.
Figure 2 is a schematic top plan view of a cultivating space in which four racks are arranged in side-by-side relationship.

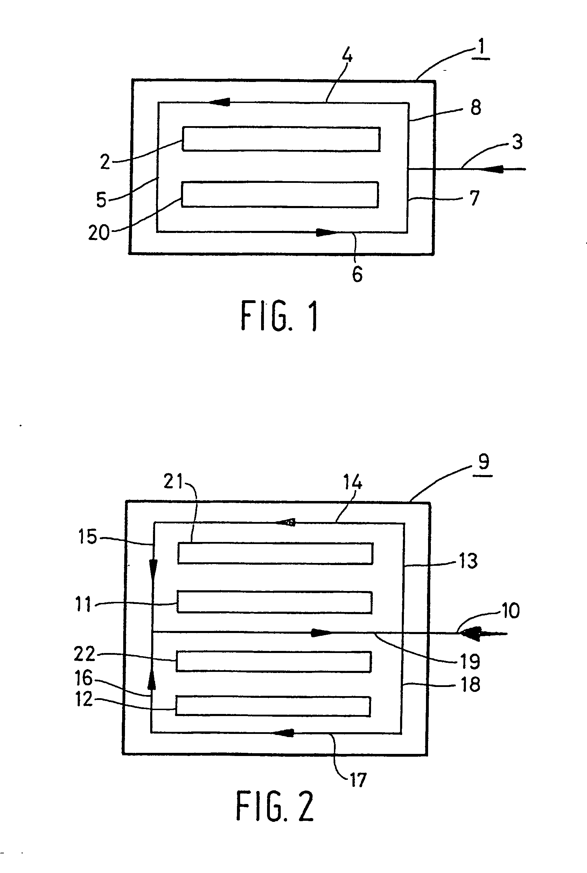

The cultivating space 1 in Figure 1 contains two racks 2, 20, on which the products to be cultivated are present. Air is supplied to the cultivating space 1 via a duct 3, which air is circulated round the racks 2 and 20 via a network consisting of ducts 8, 4, 5, 6 and 7. Since this network of air ducts is provided with spaced-apart outflow openings (not shown), an air circulation will take place at the upper side of the racks 2, 20, in such a manner that a vortex-effect is obtained, which leads to optimum air conditions. If desired, a device for conditioning the air to be supplied to the cultivating space 1 may be present at an upstream location in the duct 3, for example a heating device and/or a humidifying device (neither of which is shown). In a specific embodiment it is moreover possible to provide an additional duct (not shown) which is present between the two racks 2, 20 so as to produce a more or less separate carousel-effect both above rack 2 and above rack 20.

Figure 2 schematically shows in top plan view a cultivating space 9 in which four racks 11, 12, 21, 22 are arranged in side-by-side relationship. An air flow is introduced into the cultivating space 9 via the duct 10, which air flow splits up into an air flow via the duct 13 and an air flow via the duct 18 upon entering into the cultivating space 1. The air flow in the duct 13 is subsequently circulated in the cultivating space 9 via the ducts 14, 15 and 19. Similarly, the air flow in the duct 18 is circulated in the cultivating space 9 via the ducts 17, 16 and 19. From the viewpoint of efficiency it is preferred to configure the duct 19 as a common duct. The presence of the air outflow openings in the ducts 13, 14, 15, 16, 17, 18 and 19 and the special construction of such outflow openings will result in a so-called carousel-effect of the air in the cultivating space 9 and thus lead to optimum conditions for the products to be cultivated. In a specific embodiment it is furthermore possible to provide an additional duct (not shown) between the racks 11, 21 and the racks 12, 22, so as to effect a more or less separate carousel-effect above each rack 11, 12, 21, 22.

It should be understood that the figures as described above are merely schematic representations of the present apparatus. The present invention is not limited to the number of racks present in the cultivating space, therefore, nor to special dimensions thereof. Moreover, the present invention can also be used in greenhouses and drying chambers. It should also be understood that the present invention is not limited to the cultivation of mushrooms, but that also other products can suitably be cultivated in accordance with the present invention. It is possible to use a so-called air distribution hose as a suitable network, for example, in which case the air being supplied to the cultivating space may come from a so-called air treatment unit, for example, in which an adjustment of the temperature and the humidity level of the air to be supplied may take place, if desired.

## Claims

1. A cultivating space comprising an apparatus for conditioning air in said cultivating space (1, 9), in particular a space for cultivating mushrooms, which space (1, 9) comprises one or more racks (2, 11, 12, 20, 21, 22) on which the products to be cultivated are present, as well as means for supplying air (3, 4, 5, 6, 7, 8, 10, 13, 14, 15, 16, 17, 18, 19) to said space, which take up a stationary position above the racks (2, 11, 12, 20, 21, 22), extending substantially along the entire length of the racks (2, 11, 12, 20, 21, 22), and are provided with spaced-apart air outflow openings, **characterized in that** the means for supplying air (3, 4, 5, 6, 7, 8, 10, 13, 14, 15, 16, 17, 18, 19) are positioned around both the length and the traverse sides of the racks (2, 11, 12, 20, 21, 22) to produce a carousel effect of supplied air in the cultivating space.

2. A cultivating space according to any one or more of the preceding claims, **characterized in that** the means for supplying air (3, 4, 5, 6, 7, 8, 10, 13, 14, 15, 16, 17, 18, 19) are provided with means for heating, cooling and humidifying the air to be supplied.

3. A cultivating space according to any one or more of the preceding claims, **characterized in that** the means for supplying air (3, 4, 5, 6, 7, 8, 10, 13, 14, 15, 16, 17, 18, 19), which are disposed between two racks (2, 11, 12, 20, 21, 22) arranged adjacently to each other, form a common unit.

4. A cultivating space according to any one or more of the preceding claims, **characterized in that** the air outflow openings are configured so that the angle at which the air is blown out ranges between 10-55°.

5. A cultivating space according to any one or more of the preceding claims, **characterized in that** the outflow openings are configured such that the outflowing air is led towards the racks (2, 11, 12, 20, 21, 22).

6. A cultivating space according to any one or more of the preceding claims, **characterized in that** the outflow openings are configured such that the outflowing air is led away from the racks (2, 11, 12, 20, 21, 22).

7. A cultivating space according to any one or more of the preceding claims, **characterized in that** the diameter of the air outflow openings ranges between 2-80 mm.

8. A cultivating space according to any one or more of the preceding claims, **characterized in that** the rate of flow of air flowing out of the air outflow openings ranges between 3-35 m/s, based on an air output of 10-12 m³/m² of cultivating area.

9. A method for conditioning air in a cultivating space (1, 9), in particular a space for cultivating mushrooms, which space (1, 9) comprises one or more racks (2, 11, 12, 20, 21, 22) on which the products to be cultivated are present, as well as means for supplying air (3, 4, 5, 6, 7, 8, 10, 13, 14, 15, 16, 17, 18, 19) to said space, provided with spaced-apart outflow openings, wherein said means for supplying air (3, 4, 5, 6, 7, 8, 10, 13, 14, 15, 16, 17, 18, 19) are positioned above said racks (2, 11, 12, 20, 21, 22) **characterized in that** by positioning the means for supplying air (3, 4, 5, 6, 7, 8, 10, 13, 14, 15, 16, 17, 18, 19) around both the length and the traverse sides of the racks (2, 11, 12, 20, 21, 22), the blown-out air makes a circulating movement above the racks (2, 11, 12, 20, 21, 22) for realizing an efficient conditioning of the layer of air just above the products to be cultivated.

## Patentansprüche

1. Kultivierungsraum, der eine Vorrichtung zur Klimatisierung von Luft in diesem Kultivierungsraum (1, 9) umfasst, insbesondere einen Raum zum Kultivieren von Pilzen, wobei der Raum (1, 9) ein oder mehrere Gestelle (2, 11, 12, 20, 21, 22) umfasst, auf denen sich die zu kultivierenden Produkte befinden, sowie Mittel zum Zuführen von Luft (3, 4, 5, 6, 7, 8, 10, 13, 14, 15, 16, 17, 18, 19) in diesen Raum, die eine ortsfeste Lage über den Gestellen (2, 11, 12, 20, 21, 22) einnehmen, sich im Wesentlichen entlang der gesamten Länge der Gestelle (2, 11, 12, 20, 21, 22) erstrecken und mit voneinander beabstandeten Luftausströmöffnungen versehen sind, **dadurch gekennzeichnet, dass** die Mittel zum Zuführen von Luft (3, 4, 5, 6, 7, 8, 10, 13, 14, 15, 16, 17, 18, 19) um die Längs- und Querseiten der Gestelle (2, 11, 12, 20, 21, 22) herum angeordnet sind, um einen Karusselleffekt der zugeführten Luft im Kultivierungsraum zu verursachen.

2. Kultivierungsraum gemäß einem oder mehreren der vorhergehenden Ansprüche, **dadurch gekennzeichnet, dass** die Mittel zum Zuführen von Luft (3, 4, 5, 6, 7, 8, 10, 13, 14, 15, 16, 17, 18, 19) mit Mitteln zum Heizen, Kühlen und Befeuchten der zuzuführenden Luft versehen sind.

3. Kultivierungsraum gemäß einem oder mehreren der vorhergehenden Ansprüche, **dadurch gekennzeichnet, dass** die Mittel zum Zuführen von Luft (3, 4, 5, 6, 7, 8, 10, 13, 14, 15, 16, 17, 18, 19), die zwischen zwei Gestellen (2, 11, 12, 20, 21, 22) angeordnet sind, aneinander angrenzend angeordnet sind und eine gemeinsame Einheit bilden.

4. Kultivierungsraum gemäß einem oder mehreren der vorhergehenden Ansprüche, **dadurch gekennzeichnet, dass** die Luftausströmöffnungen so konfiguriert sind, dass der Winkel, mit dem die Luft ausgeblasen wird, zwischen 10-55° liegt.

5. Kultivierungsraum gemäß einem oder mehreren der vorhergehenden Ansprüche, **dadurch gekennzeichnet, dass** die Luftausströmöffnungen so konfiguriert sind, dass die ausströmende Luft in Richtung der Gestelle (2, 11, 12, 20, 21, 22) geleitet wird.

6. Kultivierungsraum gemäß einem oder mehreren der vorhergehenden Ansprüche, **dadurch gekennzeichnet, dass** die Luftausströmöffnungen so konfiguriert sind, dass die ausströmende Luft von den Gestellen (2, 11, 12, 20, 21, 22) weggeleitet wird.

7. Kultivierungsraum gemäß einem oder mehreren der vorhergehenden Ansprüche, **dadurch gekennzeichnet, dass** der Durchmesser der Luftausströmöffnungen zwischen 2-80 mm liegt.

8. Kultivierungsraum gemäß einem oder mehreren der vorhergehenden Ansprüche, **dadurch gekennzeichnet, dass** die Menge des aus den Luftausströmöffnungen ausströmenden Luftstroms zwischen 3-35 m/s liegt, bezogen auf einen Luftausstrom von 10-12 m³/m² der Kultivierungsfläche.

9. Verfahren zum Klimatisieren eines Kultivierungsraums (1, 9), insbesondere eines Raums zum Kultivieren von Pilzen, wobei der Raum (1, 9) ein oder mehrere Gestelle (2, 11, 12, 20, 21, 22) umfasst, auf denen sich die zu kultivierenden Produkte befinden, sowie Mittel zum Zuführen von Luft (3, 4, 5, 6, 7, 8, 10, 13, 14, 15, 16, 17, 18, 19) in diesen Raum, die mit voneinander beabstandeten Ausströmöffnungen versehen sind, wobei diese Mittel zum Zuführen von Luft (3, 4, 5, 6, 7, 8, 10, 13, 14, 15 16, 17, 18, 19) über diesen Gestellen (2, 11, 12, 20, 21, 22) angeordnet sind, **dadurch gekennzeichnet, dass** durch ein Anordnen der Mittel zum Zuführen von Luft (3, 4, 5, 6, 7, 8, 10, 13, 14, 15 16, 17, 18, 19) um die Längs- und Querseiten der Gestelle (2, 11, 12, 20, 21, 22) herum die ausgeblasene Luft eine zirkulierende Bewegung über die Gestelle (2, 11, 12, 20, 21, 22) ausführt, um eine effiziente Klimatisierung der Luftschicht genau über den zu kultivierenden Produkten zu erzielen.

## Revendications

1. Emplacement aménagé pour la culture comprenant un appareil de conditionnement de l'air dans ledit emplacement aménagé pour la culture (1, 9), en particulier un emplacement pour la culture des champignons, lequel emplacement (1, 9) comprend une ou plusieurs crémaillères (2, 11, 12, 20, 21, 22) sur lesquelles se trouvent les produits devant être cultivés, tout comme des moyens d'apport d'air (3, 4, 5, 6, 7, 8, 10, 13, 14, 15, 16, 17, 18, 19) vers ledit emplacement, lesquels reprennent une position fixe au dessus des crémaillères (2, 11, 12, 20, 21, 22), s'étendant sensiblement le long de l'entière longueur des crémaillères (2, 11, 12, 20, 21, 22), et sont munis d'ouvertures de sortie d'air espacées, **caractérisé en ce que** les moyens d'apport d'air (3, 4, 5, 6, 7, 8, 10, 13, 14, 15, 16, 17, 18, 19) sont positionnés autour de la longueur et des faces transversales des crémaillères (2, 11, 12, 20, 21, 22) pour produire un effet carrousel de l'air fourni dans l'emplacement aménagé pour la culture.

2. Emplacement aménagé pour la culture selon l'une quelconque des revendications précédentes ou plus, **caractérisé en ce que** les moyens d'apport d'air (3, 4, 5, 6, 7, 8, 10, 13, 14, 15, 16, 17, 18, 19) sont munis de moyens de chauffage, de refroidissement et d'humidification de l'air devant être fourni.

3. Emplacement aménagé pour la culture selon l'une quelconque des revendications précédentes ou plus, **caractérisé en ce que** les moyens d'apport d'air (3, 4, 5, 6, 7, 8, 10, 13, 14, 15, 16, 17, 18, 19), lesquels sont disposés entre deux crémaillères (2, 11, 12, 20, 21, 22) sont disposées adjacentes les unes par rapport aux autres, forment un bloc commun.

4. Emplacement aménagé pour la culture selon l'une quelconque des revendications précédentes ou plus, **caractérisé en ce que** les ouvertures de sortie d'air sont configurées de telle manière que l'angle auquel l'air est expulsé est compris entre 10 et 55 degrés.

5. Emplacement aménagé pour la culture selon l'une quelconque des revendications précédentes ou plus, **caractérisé en ce que** les ouvertures de sortie sont configurées de telle manière que l'air expulsé est conduit vers les crémaillères (2, 11, 12, 20, 21, 22).

6. Emplacement aménagé pour la culture selon l'une quelconque des revendications précédentes ou plus, **caractérisé en ce que** les ouvertures de sortie sont configurées de telle manière que l'air évacué est conduit hors des crémaillères (2, 11, 12, 20, 21, 22).

7. Emplacement aménagé pour la culture selon l'une quelconque des revendications précédentes ou plus, **caractérisé en ce que** le diamètre des ouvertures de sortie d'air est compris entre 2 et 80 mm.

8. Emplacement aménagé pour la culture selon l'une quelconque des revendications précédentes ou plus, **caractérisé en ce que** le débit de l'air sortant des ouvertures de sortie d'air est compris entre 3 et 35 m/s, basé sur une sortie d'air comprise entre 10 et 12 m³/m² de zone cultivée.

9. Procédé de traitement de l'air dans un emplacement aménagé pour la culture (1, 9), en particulier dans un emplacement pour cultiver des champignons, lequel emplacement (1, 9) comprend une ou plusieurs crémaillères (2, 11, 12, 20, 21, 22) sur lesquelles sont disposés les produits devant être cultivés, tout comme des moyens d'apport d'air (3, 4, 5, 6, 7, 8, 10, 13, 14, 15, 16, 17, 18, 19) vers ledit emplacement, munis d'ouvertures de sortie d'air espacées, dans lequel lesdits moyens d'apport d'air (3, 4, 5, 6, 7, 8, 10, 13, 14, 15, 16, 17, 18, 19) sont positionnés au dessus desdites crémaillères (2, 11, 12, 20, 21, 22) **caractérisé en ce qu'**en positionnant les moyens d'apport d'air (3, 4, 5, 6, 7, 8, 10, 13, 14, 15, 16, 17, 18, 19) autour de la longueur et des faces transversales des crémaillères (2, 11, 12, 20, 21, 22), l'air expulsé fait un mouvement de brassage au dessus des crémaillères (2, 11, 12, 20, 21, 22) afin de réaliser un traitement efficace de la couche d'air juste au dessus des produits devant être cultivés.
